(19) Europäisches Patentamt
European Patent Office
Office européen des brevets

(11) Publication number: **0 098 752**
**B1**

(12) **EUROPEAN PATENT SPECIFICATION**

(45) Date of publication of patent specification: **16.06.87**

(51) Int. Cl.[4]: **C 08 G 18/12**, C 08 G 18/67, C 08 G 18/66, C 08 G 18/32, C 08 G 18/34, C 08 L 75/04

(21) Application number: **83303856.5**

(22) Date of filing: **01.07.83**

(54) **Process for producing aqueous dispersions of polyurethanes.**

(30) Priority: **01.07.82 IT 2217882**

(43) Date of publication of application:
**18.01.84 Bulletin 84/03**

(45) Publication of the grant of the patent:
**16.06.87 Bulletin 87/25**

(84) Designated Contracting States:
**BE DE FR GB NL**

(56) References cited:
**EP-A-0 000 029**
**EP-A-0 003 521**
**EP-A-0 004 069**
**EP-A-0 026 313**
**EP-A-0 075 775**
**EP-A-0 076 126**
**DE-A-2 744 544**
**US-A-3 756 992**
**US-A-4 153 778**
**US-A-4 183 836**

(73) Proprietor: **Resem S.p.A.**
**31, Foro Buonaparte**
**I-20121 Milan (IT)**

(72) Inventor: **Trovati, Aldo**
**1, via Borsi**
**Novara (IT)**

(74) Representative: **Whalley, Kevin et al**
**MARKS & CLERK 57/60 Lincoln's Inn Fields**
**London WC2A 3LS (GB)**

EP 0 098 752 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a process for producing aqueous dispersions of polyurethanes.

The presently known operative processes for producing stable aqueous solutions of polyurethanes are various; many such processes are described in the patent and bibliographic literature, see for instance D. Dieterich, Progress in Organic Coatings, 9, 281 (1981).

Such aqueous dispersions are nearly all of ionomeric type, i.e. they contain inside the polyurethane macromolecule some hydrophilic centers of ionic type, which act as internal surfactants and make the polymer dispersable or soluble in water.

The introduction of such ionic centers is carried out by employing particularly diols containing groups which can be salified and which do not react or react only with difficulty with the isocyanate groups.

The ionic charge of the polyurethane depends on the nature of these diols: for instance with tertiary dialkanolamines and subsequent quaternization with organic or inorganic acids, hydrodispersed polyurethanes are obtained having cationic nature; by using diols containing a carboxylic or sulphonic or phosphoric group, after salification, polyurethane dispersions are obtained having anionic nature.

The preparation methods may be of solvent type, that is to say the polyurethane, before its dispersion in water, is obtained in solution of an organic solvent, that is inert towards the free isocyanate groups, such as acetone, methylketone, dioxane, or tetrahydrofuran, which at the end of the preparation is removed by distillation.

The amount of organic solvent is generally very high, from 1 to 3 times the weight of the polyurethane, considered as dry, and therefore it is apparent that such a process presents some drawbacks when applied on an industrial scale. Such drawbacks are low productivity per unit of available volume, necessity of rectifying the recycle solvent owing to its high water content, and long preparations times owing to the low temperature which can be reached and owing to the distillation operations.

Methods which allow a sensible reduction in the organic solvent are described in the patent literature; for instance in U.S. patent No. 4,183,836 it is disclosed that a polyisocyanate polymer also containing carboxylic groups is dispersed in an aqueous solution containing a tertiary amine, that acts as salification agent, and a diamine that acts as chain lengthening agent, by acting on the isocyanate terminal groups of the prepolymer, thereby obtaining an ionic polyurethane-polyurea dispersed in water.

In German Patent No. 2,725,589 it is disclosed that a polyisocyanate prepolymer containing ionic groups is mixed, under anhydrous conditions, with diamines blocked by ketones (ketonimines) which are inert towards the isocyanate groups; the subsequent addition of the water hydrolyzes the ketonimine groups to amine groups, and therefore the free diamine is formed again, which acts as a chain lengthening agent, as in the previously mentioned U.S. Patent No. 4,183,836.

In European patent No. 4069 it is disclosed that the lengthening (elongation) of the polyisocyanate prepolymers containing ionic groups is carried out after mixing, under anhydrous conditions, with hydrazines blocked by ketones (ketonhydrazines) and subsequent addition of water; the mechanism of the subsequent reactions is similar to those previously described.

In U.S. patent No. 3,756,992 another preparation method is described, according to which a polyisocyanate prepolymer containing ionic and/or ionizable centers is previously converted into a prepolymer with ureic terminal groups ($-NH-CO-NH_2$) by reaction with urea, by working at high temperature in order to maintain the prepolymer in the method state. After its dispersion in water, on such a prepolymer, methylol groups are introduced on the ureic terminal groups or also on the NH-groups of the preformed urethanic groups, by means of formaldehyde in aqueous solution or by means of formaldehyde releasing compounds. By subsequent self-condensation of the formed methylol groups, polyurethanes with a high molecular weight are obtained.

By using methods based on the water dispersion of ionized and subsequently lengthened (extended) polyisocyanate prepolymers with free or differently blocked diamines and/or hydrazines, essentially linear polyurethanes-polyureas are obtained and such methods can be easily applied by employing polyisocyanate prepolymers based on aliphatic isocyanates. On the contrary, with aromatic prepolymers the high reactivity of the isocyanate groups towards the water involves problems of foaming of the bulk and of formation of coagula, which cannot be dispersed again. On the other hand, the methods based on the condensation of the ionomeric methylated polyurethanes, although they allow the obtaining of reticulated structures and, consequently, film having high resistance towards the solvent, present the drawback that they give rise to finished products which always contain traces of free formaldehyde, with a very sharp odour and, above all, they release to the environment amounts of formaldehyde previously linked as methylol or methylol-ether groups, in addition to the free formaldehyde, during the application steps, which in nearly all the processes require a thermal treatment.

Therefore, the present invention aims to provide a process for obtaining polyurethane dispersions that can be easily realized either with aromatic, aliphatic or cycloaliphatic organic isocyanates; furthermore, according to such process, no organic solvent or only a small quantity thereof should be used during the polyurethane preparation, reticulated macromolecular structures should be obtained, and highly irritating and dangerous decomposition products such as formaldehyde should not be released to the environment.

The present invention provides a process for producing stable aqueous dispersions of polyurethanes containing in the macromolecule hydrophilic ionic groups, as internal surfactants, either of anionic or

cationic nature, which are present in amounts of 10—60 meq/100 g of dry polyurethane, the process being characterized by the following steps:

a) a mixture of a diol containing ionizable groups, which can be converted into hydrophilic anionic or cationic groups, and of an essentially linear macroglycol, having a molecular weight of from 500 to 5000, of polyol-polyether and/or polyol-polyester type, is reacted at a temperature not higher than 100°C with an excess of a diisocyanate, thereby obtaining a prepolymer containing free isocyanate groups:

b) the polyisocyanate prepolymer is then converted into oligo-urethane containing vinyl terminal unsaturated groups, by reaction with a compound containing hydroxyl radicals, which are reactive towards the isocyanate group, and having the general formula:

$$CH_2{=}\underset{\displaystyle R}{\underset{|}{C}}{-}COOX$$

where R is H or $CH_3$, and X is a hydroxyalkyl radical;

c) the obtained oligo-urethane is subjected to salification in order to convert the ionizable groups into hydrophilic cations or anions, respectively of quaternary ammonium type or of carboxylic, sulphonic or phosphonic group type;

d) the oligo-urethane containing the hydrophilic cationic and anionic groups is subjected to polymerization treatment of the terminal unsaturated groups, in an aqueous dispersion, in the presence of a radical catalyst at a temperature not higher than 100°C, so as to obtain an aqueous dispersion of polyurethane having a pre-established reticulation degree, that can be regulated by means of an optional addition of comonomer present in the polymerization step.

In the process according to the invention, use may be made of a diol containing a carboxylic group that is subsequently salified by a tertiary amine. Alternatively, use may be made of a diol containing a tertiary amine group, that is subsequently converted into a quaternary ammonium cation by salification.

According to the present invention, the polyurethane is obtained through the formation of a polyisocyanate prepolymer by reacting an organic diisocyanate and a mixture consisting of a macroglycol and a diol containing ionizable groups, suitably in such a quantity that the molar ratio between the isocyanate and the sum of the hydroxyl groups of the macroglycol and of the diol is from 1.2:1 to 2:1, preferably 1.5:1.

It is also possible to introduce triols having a low molecular weight, the quantity of which, however, is critical for the purpose of inducing the formation of prepolymers with a viscosity that can be easily treated in conventional apparatus. Furthermore, for the purpose of inducing the formation of more reticulated macromolecular structures, such small quantities of triols have practically no influence.

The polyisocyanate prepolymer is then converted into oligo-urethane containing terminal unsaturated functional groups of acrylic and/or methacrylic nature, by reaction with a hydroxy-alkyl-acrylate or a hydroxyalkyl-methacrylate. The amount of such compound containing at least one hydroxyl group and at least one unsaturated ethylenic grouping depends on the content of isocyanate free groups still present in the polyisocyanate prepolymer, so that the ratio between the —NCO groups of the polyioscyanate prepolymer and the —OH groups of the hydroxylated unsaturated compound, i.e. the eq-NCO/eq-OH ratio, is preferably from 0.5:1 to 1.1:1, more preferably 1:1.

The formation of the polyisocyanate prepolymer and its subsequent transformation into oligo-urethane with terminal ethylenic unsaturation can be carried out in the complete absence of organic solvent. The reaction temperatures to obtain the various polyisocyanate prepolymers are almost always lower than 100°C, preferably from 50° to 90°C; the subsequent reactions with the compounds containing at least one hydroxyl group and an ethylenically unsaturated grouping are carried out at temperatures lower than 150°C, preferably from 60° to 120°C.

The reactions can be carried out in the presence of known catalysts such as the tin-organic compounds or the tertiary amines; however, this is not generally necessary and it is preferable to carry out the reaction without a catalyst.

The essentially linear macroglycols, which can be utilized to form the oligo-urethane, have a molecular weight from 500 to 5000, preferably from 800 to 3000, and are of the saturated polyester, polyether, polyester-urethane type.

Examples of polyesters are the products of polycondensation of bicarboxylic, preferably aliphatic, acids or anhydrides, having from 4 to 9 carbon atoms with aliphatic diols having from 2 to 8 carbon atoms, alone or in mixture among them, or the polycondensation products on diolic "starters" of ε-caprolactam.

Examples of polyester-urethanes are the products of polyaddition of the above mentioned polyesters with organic diisocyanates in molar defect.

Examples of polyethers are the various types of polyethyleneglycol, polypropyleneglycol and, preferably, the polymerization products of tetrahydrofuran.

Examples of polyols with low molecular weight, which may be used in small quantities together with the above mentioned macroglycols, are preferably of trifunctional kind, such as trimethylpropane, glycerol and 1,2,6-hexanetriol.

The employable organic diisocyanates may be either of the aromatic, aliphatic or cycloaliphatic type,

but the aliphatic or cycloaliphatic diisocyanates are preferred, when high resistance against UV radiation and against hydrolytic degradation are desired.

Examples of suitable diisocyanates are 2,4-toluenediisocyanate, alone or in mixture with the 2,6-toluenediisocyanate isomer, 4,4'-diphenyl-methanediisocyanate, 4,4'-dicyclohexylmethanediisocyanate, 1-isocyanate-3, isocyanate-methyl-3,5,5-trimethylcyclohexane (or isophoronediisocyanate), and 2,2,4-trimethylhexamethylenediisocyanate in mixture with the 2,6,4-trimethylhexamethylene diisocyanate isomer.

The compounds containing a hydroxyl group, capable of reacting with the isocyanate groups of the prepolymer, and an ethylenically unsaturated group, necessary to convert the polyisocyanate prepolymer into an oligourethane with terminal unsaturation, have the general formula:

$$CH_2{=}\underset{\displaystyle R}{\underset{|}{C}}{-}COOX$$

where R is hydrogen or methyl and X is hydroxyalkyl radical, preferably 2-hydroxyethyl, 2-hydroxypropyl, 3-hydroxypropyl or 4-hydroxybutyl.

As ionizable diols, those can be employed which are able to give to the polyurethane macromolecule a preferably anionic charge, because in this case finished products are obtained which are compatible with auxiliary substances, pigments, dyes and aqueous dispersions of different nature (for instance, acrylic, vinylic, butadieneacrylonitrilic etc.) nearly all of them of anionic nature.

As ionizable diols, those can be employed which contain a free carboxylic group, preferably if it is linked with the same carbon atom carrying the two hydroxyl groups, for instance the dimethylolacetic, dimethylolpropionic and dimethylolbutyric acids.

Furthermore those compounds can be employed which contain at least two hydroxyl groups and a carboxylic groups that is not linked with the same carbon atom, such as the products of semiesterification of triols with bicarboxylic aliphatic anhydrides.

As salification agents of the free carboxylic groups statistically distributed in the oligo-urethane chain, use can be made of both inorganic bases such as sodium and ammonium hydroxide, and, preferably, tertiary amines or alkanolamines such as triethylamine, dimethylethanolamine, and methyldiethanolamine.

However, according to the present invention, dispersions may be obtained having cationic character by utilizing as ionizable diols the already known tertiary alkyl-dialkanolamines, such as methyldiethanolamine, butyldiethanolamine, methyldiisopropanolamine, and by subsequently effecting salification of the tertiary nitrogen atom by means of organic and/or inorganic acids, such as hydrochloric, phosphoric, formic, lactic, and acetic acids.

The salification of the oligo-urethane, either of potentially anionic or cationic kind, can be carried out by simple addition of the salification agent as such or dissolved in water and/or a suitable solvent at a temperature of about 90°C. Should the oligo-urethane have too high a viscosity at such temperature, dilution thereof may be carried out, before the salification, by means of a solvent which can be preferably mixed with water and have a boiling temperature lower than that of water, so that it can be removed by distillation.

The necessary amount of solvent does not usually exceed one fifth of the weight of the oligo-urethane. The preferred solvents are acetone, methyl-ethylketone, and tetrahydrofuran.

When the salification has been carried out, prior to possible dilution in organic solvent as above described, the oligo-urethane can be diluted in any ratio with water. Therefore the water dispersion is proceeded with in order to obtain a content of non-volatile substance that is variable according to the content of the ionic groups, generally from 20 to 60% by weight, more preferably from 30 to 50% by weight, after having removed by distillation the possible organic solvent that had been previously employed.

Then the unsaturated oligo-urethane, dissolved or dispersed in water as above described, can be polymerized, according to known techniques of bulk or semi-batch polymerization. The polymerization is carried out by using a generator of free radicals, of organic peroxide of hydroperoxide kind, such as benzoyl peroxide, dicumyl peroxide, ter-butyl-hydroperoxide, cumene hydroperoxide, p-methane hydroperoxide, or sodium, potassium, or ammonium persulfate, used alone or together with a reducing agent such as sodium metabisulfite or sodium formaldehyde-sulfoxylate.

The polymerization temperature can be from 10° to 100°C, depending on the kind of initiator or of the initiator-reducing agent. The preferred polymerization temperature is from 50° to 70°C.

By carrying out the polymerization of oligo-urethanes containing at least two unsaturated terminal groups, reticulated tridimensional macromolecular structures are formed. If desired, the reticulation degree can be regulated at will, by carrying out the polymerization in the presence of other mono- or polyfunctional ethylenically unsaturated monomers. These can be added to the reaction bulk either during the transformation of the polyisocyanate prepolymer into unsaturated oligo-urethane or to the aqueous dispersion thereof. In both cases the addition of the comonomers does not present any drawback until the

amount thereof constitutes about 40% by weight, calculated on the oligo-urethane, calculated as dry, owing to the stabilizing action of the present ionic centers, that is comparable to a surfactant action.

Examples of monofunctional ethylenically unsaturated monomers that can be utilized are methyl, ethyl, and butyl, acrylates and methacrylates, vinyl esters such as vinyl acetate and propionate, and vinylaromatic compounds such as styrene, α-methyl-styrene, and vinyltoluene.

Examples of polyfunctional ethylenically unsaturated monomers are trimethylpropane-triacrylate and trimethacrylate, pentaerythrytol triacrylate and trimethacrylate, 1,6-hexanediol diacrylate neopentyl glycol diacrylate and dimethacrylate, diethylene glycol diacrylate, and tetraethylene glycol diacrylate.

The final aqueous dispersions, obtained according to the present invention, are stable for a long time with complete lack of surfactant and/or colloidal protectors, are practically odourless, and consist of polymeric particles with average diameters variable within large limits, depending on the amount of the contained ionic centers, which can be numerically expressed in milliequivalents (meq) per 100 g of polymer, considered as dry. These values can vary from 10 to 60 meq/100 g of dry substance, preferably from 20 to 40 meq/100 g of dry substance.

Because of the ionic nature of the polymer, such dispersions are sensitive to electrolytes.

A possible stabilization thereof can be induced by surfactant and/or colloidal protectors of non-ionic kind, such as ethoxylated derivatives of higher fatty alcohols or alkylphenols. The use of ionic surfactants must, of course, take into account the cationic or anionic nature of such dispersions.

By evaporation of the water the aqueous dispersions of the invention give rise to the forming of films of various hardness, flexibility and elasticity depending on the great variability of utilizable starting materials and on their formulative flexibility, which allows considerable variation in providing "hard" and "soft" segments of the finished polyurethane.

The aqueous dispersions of the invention can be advantageously employed as aqueous polymeric dispersions in coatings for wood, paper and metal, in the treatment of textiles, in the finishing of skins, and as adhesives, binders for fibrous materials, and dressings for fiber glass.

The invention will be further described with reference to the following illustrative Examples.

Example 1

Into a reactor provided with a stirrer and a cooler and kept under an atmosphere of dry nitrogen, dipped in an oil bath with temperature regulation, were fed in the following order: 241.87 g of a polyester obtained from adipic acid, ethylene glycol and 1,4-butanediol having an average molecular weight of about 1940 at reduced residual acidity (acidity number 0.2 mg KOH/g), 13.4 g of dimethylolpropionic acid and 66.56 g of toluenediisocyanate 80/20 (mixture of 80% by weight of 2,4-isomer and 20% of 2,6-isomer).

The reaction bulk, after having remained under stirring at 60°C for about 30 minutes, was heated to 80°C and kept at this temperature until the content of free isocyanate groups was about 5.2% by weight.

Then the atmosphere of dry nitrogen was replaced by dry air and 36.54 g of 2-hydroxyethylacrylate were fed in all at once. The reaction was carried out at 90°C until the disappearance of the free isocyanate groups occurred, which was determined by means of IR spectrophotometry. Salification of the melted oligo-urethane was then effected by addition of 7.13 g of dimethylethanolamine, followed by dispersion thereof in 548 g of deionized water.

The nitrogen atmosphere was then restored and the dispersion thermostated at 65°C. Over a period of two hours 14.62 g of an aqueous solution of ter-butylhydroperoxide at 10% by weight were added dropwise and, at the end of the addition thereof, the dispersion was maintained at 65°C for a further hour.

The final dispersion had a white milky (lactescent) aspect, a content of solids of 39% by weight and a content of anionic groups of about 27 meq/100 g of dry substance.

By evaporation of the water at room temperature there was formed a transparent, colourless, moderately flexible film, that was insoluble in acetone, dimethylformamide, and trichloroethylene.

Example 2

By following the same procedure as described in example 1, a polyurethane dispersion was prepared, that was formulated as follows:

| | |
|---|---|
| polyester of Example 1 | 251.55 g |
| dimethylolpropionic acid | 13.40 g |
| toluenediisocyanate 80/20 | 60.03 g |
| 2-hydroxypropylacrylate | 29.92 g |
| dimethylethanolamine | 7.13 |
| ter-butylhydroperoxide (solution at 10% by weight) | 14.48 g |
| deionized water | 543.04 g |

The content of free isocyanate groups of the polyisocyanate prepolymer was 4.1% by weight.

The final dispersion had a content of solids of 39.2% and a content of anionic groups of about 27.6 meq/100 g of dry substance; its colour was milky (lactescent) and its viscosity low.

A film, obtained by evaporation of the water, was colourless, more flexible than that of Example 1, and was insoluble in organic solvents.

Such a dispersion, added with conventional thickeners, dyes and additives, used in the common acrylic emulsions, can be employed as an adhesive layer in the manufacture of imitation leather obtained by the so-called "transfer" method. The obtained product was characterized by a high adhesion of the polyurethane layer to the textile support, of agreeable hand softness, and high resistance to solvents and washings.

Example 3

By following the same procedure as described in Example 1, a polyurethane dispersion was prepared, that was formulated as follows:

| | |
|---|---|
| polyester of Example 1 | 263.16 g |
| dimethylolpropionic acid | 14.74 g |
| hexamethylenediisocyanate | 57.96 g |
| butanediolmonoacrylate | 28.55 g |
| dimethylethanolamine | 7.84 g |
| ter-butylhydroperoxide (solution at 10% by weight) | 14.89 g |
| deionized water | 558.37 g |

The content of free isocyanate groups of the polyisocyanate prepolymer was 3.7% by weight.

The final dispersion had a content of solids of about 39.1% and a content of anionic groups of about 29.5 meq/100 g of dry substance.

A film, obtained by evaporation of the water, was colourless, flexible and insoluble in organic solvents.

The dispersion can be advantageously employed in the light finishing of quality skins, since it confers high resistaance against various wet and dry abrasions, with an excellent maintenance of the colour tonality even after exposure to the sun and U.V. radiation for a long time.

Example 4

By following the same procedure as described in Example 1, a polyurethane dispersion was prepared, that was formulated as follows:

| | |
|---|---|
| polyester of Example 1 | 263.16 g |
| dimethylolpropionic acid | 14.74 g |
| trimethylhexamethylenediisocyanate | 72.45 g |
| 2-hydroxyethylacrylate | 25.74 g |
| dimethylethanolamine | 7.84 g |
| ter-butylhydroperoxide (solution at 10% by weight) | 15.35 g |
| deionized water | 575.89 g |

The content of free isocyanate groups of the polyisocyanate prepolymer was 3.7% by weight.

The final dispersion had a content of solids of about 39.2% and a content of anionic groups of 28.6 meq/100 g of solids.

A film, obtained by evaporation of the water, was colourless, flexible and insoluble in organic solvents.

Example 5

By following the same procedure as described in Example 1, a polyurethane dispersion was prepared, that was formulated as follows:

| | |
|---|---|
| polyester of Example 1 | 251.55 g |
| dimethylolpropionic acid | 13.40 g |
| hexamethylenediisocyanate | 57.96 g |
| 2-hydroxypropylmethylacrylate | 33.12 g |
| dimethylethanolamine | 7.13 g |
| ter-butylhydroperoxide (solution at 10% by weight) | 14.52 g |
| deionized water | 544.74 g |

The content of free isocyanate groups of the polyisocyanate prepolymer was 4.3% by weight.

The final dispersion had a content of solids of 39.2% and a content of anionic groups of 27.5 meq/100 g of solids.

A film, obtained by evaporation of the water, was colourless, with good mechanical characteristics and insoluble in organic solvents.

Example 6

By following the same procedure as described in Example 1, a polyurethane dispersion was prepared, that was formulated as follows:

| | |
|---|---|
| polyester of Example 1 | 251.55 g |
| dimethylolpropionic acid | 13.40 g |
| isophoronediisocyanate | 76.06 g |
| 2-hydroxyethylacrylate | 26.68 g |
| dimethylethanolamine | 7.13 g |
| ter-butylhydroperoxide (solution at 10% by weight) | 15.00 g |
| deionized water | 562.18 g |

The content of free isocyanate groups of the polyisocyanate prepolymer was 4.1% by weight.

The final dispersion had a content of 39.2% of solids and a content of anionic groups of 26.7 meq/100 g of solids.

A film, obtained by evaporation of the water, was colourless, and insoluble in organic solvents.

The dispersion can be applied in a similar manner to that of example 3, in the finishing of full bloom of skins.

## Claims

1. A process for producing stable aqueous dispersions of polyurethanes containing in the macromolecule hydrophilic ionic groups, as internal surfactants, either of anionic or cationic nature, which are present in amounts of 10—60 meq/100 g of dry polyurethane, the process being characterised by the following steps:

a) a mixture of a diol containing ionizable groups, which can be converted into hydrophilic anionic or cationic groups, and of an essentially linear macroglycol, having a molecular weight of from 500 to 5000, of polyol-polyether and/or polyol-polyester type, is reacted at a temperature not higher than 100°C with an excess of a diisocyanate, thereby obtaining a prepolymer containing free isocyanate groups;

b) the polyisocyanate prepolymer is then converted into oligo-urethane containing vinyl terminal unsaturated groups, by reaction with a compound containing hydroxyl radicals, which are reactive towards the isocyanate group, and having the general formula:

$$\begin{array}{l} CH_2{=}C{-}COOX \\ \quad\;\;\;| \\ \quad\;\;\;R \end{array}$$

where R is H or $CH_3$, and X is a hydroxyalkyl radical;

c) the obtained oligo-urethane is subjected to salification in order to convert the ionizable groups into hydrophilic cations or anions, respectively of quaternary ammonium type or of carboxylic, sulphonic or phosphonic group type;

d) the oligo-urethane containing the hydrophilic cationic and anionic groups is subjected to polymerization treatment of the terminal unsaturated groups, in an aqueous dispersion, in the presence of a radical catalyst at a temperature not higher than 100°C, so as to obtain an aqueous dispersion of polyurethane having a pre-established reticulation degree, that can be regulated by means of an optional addition of comonomer present in the polymerization step.

2. A process as claimed in claim 1, characterised in that use is made of a diol containing a carboxylic group that is subsequently salified by a tertiary amine.

3. A process as claimed in claim 1, characterised in that use is made of a diol containing a tertiary amine group, that is subsequently converted into a quaternary ammonium cation by salification.

4. A process as claimed in any of claims 1 to 3, characterized in that the reaction between polyisocyanate prepolymer and hydroxylated unsaturated compound is carried out at a temperature from 60° to 120°C.

5. A process as claimed in any of claims 1 to 4, characterized in that the ratio between the —NCO groups of the polyisocyanate prepolymer and the —OH groups of the hydroxylated unsaturated compound is from 0.5:1 to 1.1:1.

6. A process as claimed in any of claims 1 to 5, characterized in that the molar ratio between the isocyanate groups and the sum of the hydroxyl groups of the macroglycol and the diol is from 1.2:1 to 2:1.

7. An aqueous dispersion of a polyurethane having a reticulated structure, having hydrophilic ionic groups, present in amounts of 10—60 meq/100 g of polymer, obtained at a concentration of from 20 to 60% by weight of dry polymer, according to the process of claim 1.

## Patentansprüche

1. Verfahren zur Herstellung stabiler wäßriger Polyurethandispersionen, die in dem Makromolekül hydrophile ionische Gruppen als innere oberflächenaktive Mittel von entweder anionischer oder kationischer Natur enthalten, die in Mengen von 10 bis 60 mäq/100 g des trockenen Polyurethans anwesend sind, wobei das Verfahren durch die folgenden Schritte gekennzeichnet ist:

a) man läßt eine Mischung eines Diols, das ionisierbare Gruppen enthält, die in hydrophile anionische

oder kationische Gruppen überführt werden können und eines im wesentlichen linearen Makroglykols mit einem Molekulargewicht von 500 bis 5000, vom Polyolpolyether- und/oder Polyolpolyester-Typ bei einer Temperatur, die nicht höher als 100°C ist, mit einem Überschuß eines Diisocyanats reagieren, wobei man ein Vorpolymerisat erhält, das freie Isocyanatgruppen enthält;

b) dann wird das Polyisocyanatvorpolymerisat durch Reaktion mit einer Verbindung, die Hydroxylgruppen enthält, die mit der Isocyanatgruppe reagiert und die allgemeine Formel:

$$CH_2{=}\underset{\displaystyle R}{\underset{|}{C}}{-}COOX$$

hat, worin R=H oder $CH_3$ ist und X ein Hydroxyalkylradikal ist, in ein Oligourethan, das ungesättigte Vinylendgruppen enthält, überführt;

c) die erhaltenen Oligourethane werden einer Salzbildung unterworfen, um die ionisierbaren Gruppen in hydrophile Kationen oder Anionen, bzw. in solche vom Typ quaternärer Ammoniumgruppen oder vom Typ der Carboxyl-, Sulfo- oder Phosphogruppen zu überführen;

d) das die hydrophilen kationischen und anionischen Gruppen enthaltende Oligourethan wird winer Polymerisation der ungesättigten Endgruppen in einer wäßrigen Dispersion, in Anwesenheit eines Radikalkatalysators bei einer Temperatur, die nicht höher als 100°C ist, unterworfen, um eine wäßrige Dispersion des Polyurethans, das einen vorher festgesetzten Vernetzungsgrad hat, zu erhalten, der durch eine wahlweise Zugabe eines dann in der Polymerisationsstufe vorhandenen Comonomers geregelt werden kann.

2. Verfahren nach Anspruch 1, dadurch gekennzeichnet, daß ein Diol verwendet wird, das eine Carboxylgruppe enthält, die nachfolgend durch ein tertiäres Amin in ihr Salz überführt wird.

3. Verfahren nach Anspruch 1, dadurch gekennzeichnet, daß ein Diol verwendet wird, das eine tertiäre Aminogruppe enthält, die nachfolgend durch Salzbildung in ein quaternäres Ammoniumkation überführt wird.

4. Verfahren nach einem der Ansprüche 1 bis 3, dadurch gekennzeichnet, daß die Reaktion zwischen dem Polyisocyanatvorpolymerisat und der ungesättigten Hydroxylverbindung bei einer Temperatur von 60 bis 120°C durchgeführt wird.

5. Verfahren nach einem der Ansprüche 1 bis 4, dadurch gekennzeichnet, daß das Verhältnis zwischen den —NCO-Gruppen des Polyisocyanatvorpolymerisats und den —OH-Gruppen der ungesättigten Hydroxylverbindung von 0,5:1 bis 1,1:1 beträgt.

6. Verfahren nach einem der Ansprüche 1 bis 5, dadurch gekennzeichnet, daß das Molverhältnis zwischen den Isocyanatgruppen und der Summe der Hydroxylgruppen des Makroglykols und des Diols von 1,2:1 bis 2:1 beträgt.

7. Wäßrige Polyurethandispersion, die eine vernetzte Struktur und hydrophile ionische Gruppen hat, die in Mengen von 10 bis 60 mäq/100 g Polymer anwesend sind und die bei einer Konzentration von 20 bis 60 Gew.-% des trockenen Polymers nach dem Verfahren von Anspruch 1 erhalten worden sind.

**Revendications**

1. Un procédé de préparation de dispersions aqueuses stables de polyuréthane contenant comme agents tensio-actifs internes dans la macromolécule des groupes ioniques hydrophiles de nature soit anionique, soit cationique, présents en quantités de 10 à 60 méq/100 g de polyuréthane sec, ce procédé étant caractérisé par les étapes suivantes:

a) on fait réagir un mélange d'un diol contenant des groupes ionisables que l'on peut transformer en groupes hydrophiles anioniques ou cationiques et d'un macroglycol sensiblement linéaire dont le poids moléculaire est compris entre 500 et 5 000, de type polyol-polyéther et/ou polyol-polyester, à une température qui ne soit pas supérieure à 100°C avec un excès de diisocyanate et l'on obtient ainsi un prépolymère contenant des groupes isocyanates libres;

b) on transforme ensuite le prépolymère de polyisocyanate en oligo-uréthane contenant des groupes insaturés terminaux vinyliques, par réaction avec un composé contenant des radicaux hydroxyles, réactifs vis-à-vis du groupe isocyanate et de formule générale:

$$CH_2{=}\underset{\displaystyle R}{\underset{|}{C}}{-}COOX$$

dans laquelle:

R représente H ou $CH_3$; et

X représente un radical hydroxy-alkyle;

c) on soumet l'oligo-uréthane obtenu à une salification en vue de transformer les groupes ionisables en cations ou anions hydrophiles, de type ammonium quaternaire ou de type carboxylique, sulfonique ou phosphonique respectivement;

d) on soumet l'oligo-uréthane contenant les groupes hydrophiles cationiques et anioniques à un traitement de polymérisation des groupes insaturés terminaux en dispersion aqueuse, en présence d'un catalyseur radicalaire, à une température qui ne soit pas supérieure à 100°C, de façon à obtenir une dispersion aqueuse de polyuréthane présentant un degré de réticulation préétabli que l'on peut réguler au moyen d'une addition éventuelle du comonomère présent dans l'étape de polymérisation.

2. Un procédé selon la revendication 1, caractérisé en ce que l'on utilise un diol contenant un groupe carboxylique que l'on salifie ultérieurement à l'aide d'une amine tertiaire.

3. Un procédé selon la revendication 1, caractérisé en ce que l'on utilise un diol contenant un groupe amine tertiaire que l'on transforme ultérieurement en cation ammonium quaternaire par salification.

4. Un procédé selon l'une quelconque des revendications 1 à 3, caractérisé en ce que la réaction entre le prépolymère de polyisocyanate et le composé insaturé hydroxylé est mise en oeuvre à une température comprise entre 60 et 120°C.

5. Un procédé selon l'une quelconque des revendications 1 à 4, caractérisé en ce que le rapport entre les groupes —NCO du prépolymère d'isocyanate et les groupes OH du composé insaturé hydroxylé est compris entre 0,5/1 et 1,1/1.

6. Un procédé selon l'une quelconque des revendications 1 à 5, caractérisé en ce que le rapport molaire entre les groupes isocyanates et la somme des groupes hydroxyles du macroglycol et du diol est comprise entre 1,2/1 et 2:1.

7. Une dispersion aqueuse d'un polyuréthane de structure réticulée, renfermant les groupes ioniques hydrophiles présents en quantités de 10 à 60 méq/100 g de polymère, obtenue à une concentration de 20 à 60% en poids de polymère sec selon le procédé de la revendication 1.